# EUROPÄISCHE PATENTSCHRIFT

(11) **EP 0 865 355 B1**
(45) Veröffentlichungstag und Bekanntmachung des Hinweises auf die Patenterteilung: **30.06.1999**
(21) Anmeldenummer: 96939812.2
(22) Anmeldetag: 22.11.1996
(51) Int. Cl.: B29C 51/30

(54) **WERKZEUG ZUR HERSTELLUNG VON FORMTEILEN MIT KONTUREN**
TOOL FOR PRODUCING ARTICLES WITH CURVED SURFACES
OUTIL POUR LA PRODUCTION DE PIECES A CONFIGURATIONS PROFILEES

(30) Priorität: 23.11.1995 DE 19543620
(43) Veröffentlichungstag der Anmeldung: 23.09.1998
(73) Patentinhaber: Möller Plast GmbH, 33649 Bielefeld (DE)
(72) Erfinder: WROBBEL, Werner, D-33335 Gütersloh (DE)
(74) Vertreter: Schirmer, Siegfried, Dipl.-Ing.
(86) Internationale Anmeldenummer: DE9602242
(87) Internationale Veröffentlichungsnummer: WO9718941

(56) Entgegenhaltungen:
- GB-A- 2 080 721

## Beschreibung

Die Erfindung betrifft ein Werkzeug zur Herstellung von Formteilen mit Konturen, bestehend aus einer Matrize und einem dazugehörigen Kern, die einzeln oder gemeinsam zueinanderverfahrbar angeordnet sind und zwischen denen ein verformbares Material einlegbar ist.

Werkzeuge der aufgezeigten Gattung sind bekannt und werden vielseitig eingesetzt. Bei der Herstellung von Formteilen mit größeren Konturausformungen ergeben sich gewisse Schwierigkeiten, insbesondere bei Verwendung von Werkstoffen mit schlechter Dehnfähigkeit, z. B. durch Beimischung von Einjahrespflanzen bzw. Fasern zur Erhöhung der Festigkeit oder zur Erzielung einer Verbundwirkung mit Dekormaterial, deren Dehnfähigkeit nicht überschritten werden darf, da andernfalls ein Zerreißen des Dekormaterials eintritt.

Der Erfindung liegt die Aufgabe zugrunde, ein Werkzeug der aufgezeigten Gattung so auszubilden, daß Formteile mit größeren Konturausformungen ohne Beanstandung auch bei Verwendung von Werkstoffen mit schlechter Dehnfähigkeit und/oder bei Verwendung von Dekormaterial für eine Verbundbauweise herstellbar sind.

Diese Aufgabe wird erfindungsgemäß dadurch gelöst, daß die Matrize einen Vorkammerbereich aufweist, der zwischen dem Eingangsbereich der Matrize und der Kontur verläuft. Zweckmäßige Ausgestaltungen sind in den Unteransprüchen aufgezeigt.

Zur Anpassung an die jeweiligen Materialgegebenheiten ist der Vorkammerbereich größenveränderlich. Der Vorkammerbereich dient als Materialreservoir. Die erste Quetschkante erlaubt die Ausformung des Formteils, wobei gleichzeitig aus dem Vorkammerbereich das eingebrachte Material (Dekormaterial und/oder Werkstoff) nachfließen kann.

Ein Ausführungsbeispiel der Erfindung ist in der Zeichnung dargestellt und wird nachfolgend näher beschrieben. Es zeigen:

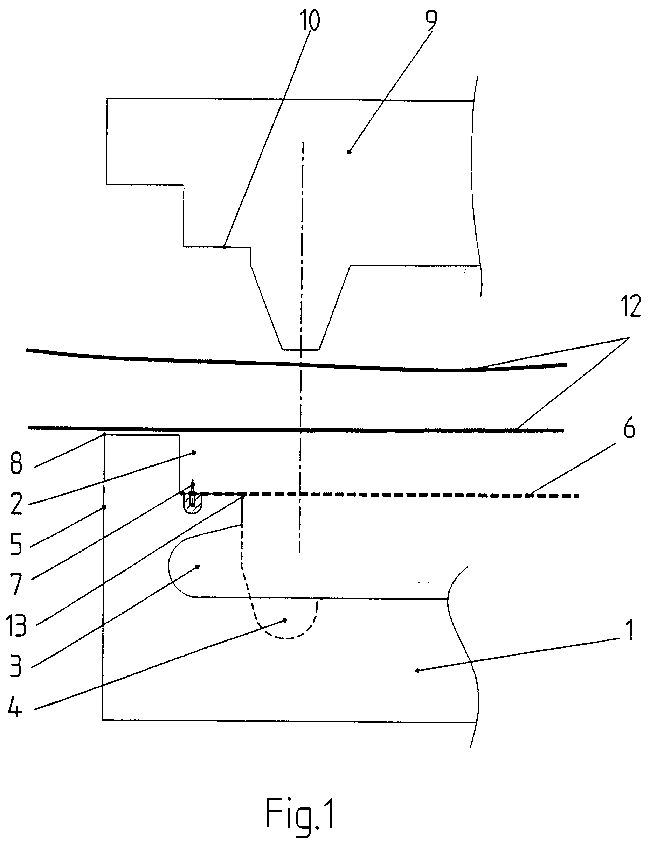

- Fig. 1: einen Vertikalschnitt durch einen Teil des Werkzeugs in der Ausgangsstellung in schematischer Darstellung;

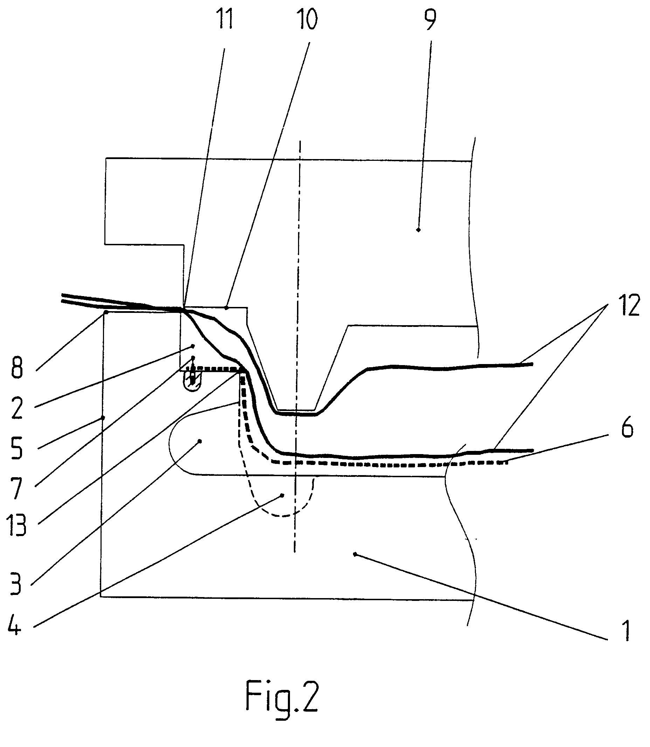

- Fig. 2: wie Fig. 1, jedoch im halbgeschlossenen Zustand des Werkzeugs und
- Fig. 3: wie Fig. 1, jedoch im geschlossenen Zustand des Werkzeugs.

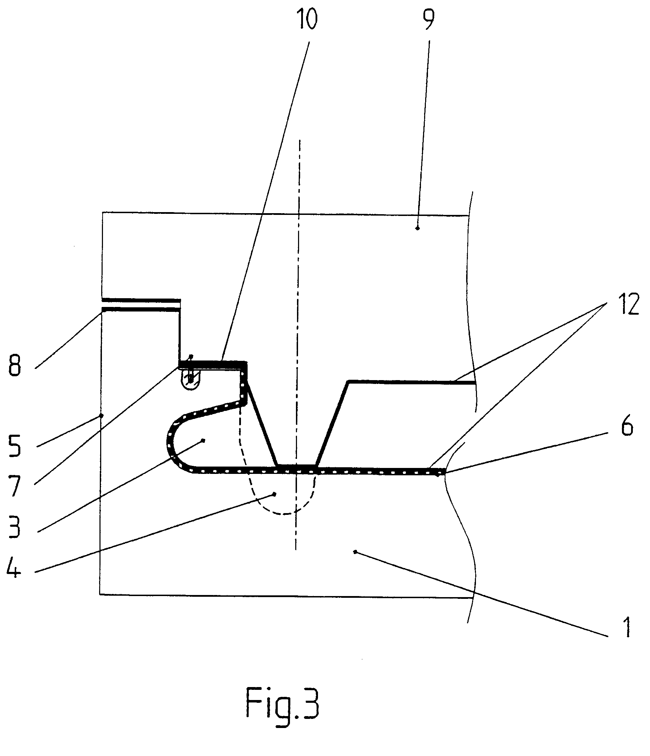

Das Werkzeug zur Herstellung von Formteilen mit Konturen besteht bekannterweise aus einer Matrize 1 und einem dazugehörigen Kern 9, zwischen denen ein Schlauch 12 eingelegt ist. Die Matrize 1 weist einen Vorkammerbereich 2 auf. Dieser Vorkammerbereich 2 ist einseitig senkrecht zur Stirnseite 5 der Matrize 1 begrenzt und verläuft zwischen dem Eingangsbereich 8 der Matrize 1 und der Hinterschneidung 3 bzw. der gestrichelt dargestellten Kontur 4. Die mit 7 bezeichnete Halterung dient zur Fixierung von Dekormaterial 6. In den Figuren ist die Halterung 7 in Form eines Stiftes dargestellt, der an dem zur Stirnseite 5 der Matrize 1 weisenden Teil des Vorkammerbereichs 2 angeordnet ist. Die Halterung 7 kann in beliebiger Gestaltung längsbeweglich geführt sein (nicht dargestellt). Der Kern 9 weist eine in den Vorkammerbereich 2 einfahrbare Druckfläche 10 auf. Zwischen dem Beginn der Druckfläche 10 und dem Beginn des Vorkammerbereichs 2 wird beim Schließen des Werkzeugs eine erste Quetschkante 11 zur Fixierung des Schlauchs 12 gebildet. Durch diese Quetschkante 11 wird eine druck- und/oder vakuumdichte Werkzeugkavität erzielt. Wie aus Figur 3 ersichtlich, ist durch das Einfahren der Druckfläche 10 eine zweite Quetschkante 13 gebildet.

### Aufstellung der Bezugszeichen:

- 1: Matrize
- 2: Vorkammerbereich
- 3: Hinterschneidung
- 4: Kontur
- 5: Stirnseite von 1
- 6: Dekormaterial
- 7: Halterung
- 8: Matrizeneingang
- 9: Kern
- 10: Druckfläche
- 11: Quetschkante
- 12: Schlauch
- 13: Quetschkante

## Patentansprüche

1. Werkzeug zur Herstellung von Formteilen mit Konturen, bestehend aus einer Matrize (1) und einem dazugehörigen Kern (9), die einzeln oder gemeinsam zueinanderverfahrbar angeordnet sind und zwischen denen ein verformbares Material einlegbar ist, dadurch gekennzeichnet, daß die Matrize (1) einen Vorkammerbereich (2) aufweist, der zwischen dem Eingangsbereich (8) der Matrize (1) und der Kontur (4) bzw. einer Hinterschneidung (3) verläuft.

2. Werkzeug nach Anspruch 1, dadurch gekennzeichnet, daß der Vorkammerbereich (2) einseitig senkrecht zur Stirnseite (5) der Matrize (1) begrenzt ist.

3. Werkzeug nach Anspruch 1 oder 2, dadurch gekennzeichnet, daß zur Fixierung von Dekormaterial (6) im Vorkammerbereich (2) eine Halterung (7) angeordnet ist.

4. Werkzeug nach Anspruch 3, dadurch gekennzeichnet, daß die Halterung (7) durch einen bzw. mehrere Stifte gebildet ist.

5. Werkzeug nach Anspruch 3 oder 4, dadurch gekennzeichnet, daß die Halterung (7) an dem zur Stirnseite (5) der Matrize (1) weisenden Teil des Vorkammerbereichs (2) angeordnet ist.

6. Werkzeug nach einem der Ansprüche 1 bis 5, dadurch gekennzeichnet, daß die Halterung (7) in einer Zwangsführung geführt ist.

7. Werkzeug nach Anspruch 6, dadurch gekennzeichnet, daß die Zwangsführung über den gesamten Vorkammerbereich (2) verläuft.

8. Werkzeug nach Anspruch 6 oder 7, dadurch gekennzeichnet, daß die Zwangsführung durch eine längs verlaufende Nut gebildet ist.

9. Werkzeug nach einem der Ansprüche 6 bis 8, dadurch gekennzeichnet, daß die Halterung (7) mit Reibungsschluß in der Zwangsführung geführt ist.

10. Werkzeug nach einem der Ansprüche 6 bis 9, dadurch gekennzeichnet, daß die zur Überwindung des Reibungsschlusses erforderliche Kraft kleiner ist als die zum Zerreißen des Dekormaterials (6) erforderliche Kraft.

11. Werkzeug nach einem der Ansprüche 8 bis 10, dadurch gekennzeichnet, daß in der Nut eine Druckfeder angeordnet ist.

12. Werkzeug nach einem der Ansprüche 1 bis 11, dadurch gekennzeichnet, daß der Vorkammerbereich (2) gegenüber dem Matrizeneingang (8) zurückgesetzt verläuft.

13. Werkzeug nach einem der Ansprüche 1 bis 12, dadurch gekennzeichnet, daß der der Matrize (1) zugeordnete Kern (9) eine dem Vorkammerbereich (2) entsprechend vorstehendverlaufende Druckfläche (10) aufweist.

14. Werkzeug nach Anspruch 13, dadurch gekennzeichnet, daß die Druckfläche (10) in den Vorkammerbereich (2) einfahrbar ausgebildet ist.

15. Werkzeug nach Anspruch 13 oder 14, dadurch gekennzeichnet, daß zwischen dem Beginn der Druckfläche (10) und dem Beginn des Vorkammerbereichs (2) eine erste Quetschkante (11) zur Fixierung des verformbaren Materials (12) herstellbar ist.

16. Werkzeug nach Anspruch 15, dadurch gekennzeichnet, daß durch die erste Quetschkante (11) eine druck- und/oder vakuumdichte Werkzeugkavität erreichbar ist.

17. Werkzeug nach einem der Ansprüche 13 bis 16, dadurch gekennzeichnet, daß am Ende des Vorkammerbereichs (2) durch das Einfahren der Druckfläche (10) eine zweite Quetschkante (13) herstellbar ist.

18. Werkzeug nach einem der Ansprüche 13 bis 17, dadurch gekennzeichnet, daß an den zueinanderweisenden Seiten der Matrize (1) und/oder des Kerns (9) austauschbare Einsätze zur Größenveränderung der Quetschkanten (11; 13) angeordnet sind.

## Claims

1. Tool for the production of moulded parts with outlines, the tool consisting of a matrix (1) and a core (9) belonging thereto, which are arranged to be displaceable each relative to the other individually or together and between which a deformable material can be laid, characterised in that the matrix (1) comprises an antechamber region (2), which extends between the entry region of the matrix (1) and the outline (4) or an undercut (3).

2. Tool according to claim 1, characterised in that the antechamber region (2) is bounded perpendicularly to the end face (5) of the matrix (1) at one side.

3. Tool according to claim 1 or 2, characterised in that a mount (7) is arranged for the fixing of decorative material (6) in the antechamber region (2).

4. Tool according to claim 3, characterised in that the mount (7) is formed by one or more pins.

5. Tool according to claim 3 or 4, characterised in that the mount (7) is arranged at that part of the antechamber region (2), which faces the end face (5) of the matrix (1).

6. Tool according to one of the claims 1 to 5, characterised in that the mount (7) is guided in a constraining guide.

7. Tool according to claim 6, characterised in that the constraining guide extends over the entire antechamber region (2).

8. Tool according to claim 6 or 7, characterised in that the constraining guide is formed by a longitudinally extending groove.

9. Tool according to one of the claims 6 to 8, characterised in that the mount (7) is guided in the constraining guide by friction locking.

10. Tool according to one of the claims 6 to 9, characterised in that the force required to overcome the friction locking is smaller than the force required to tear the decorative material (6).

11. Tool according to one of the claims 8 to 10, characterised in that a compression spring is arranged in the groove.

12. Tool according to one of the claims 1 to 11, characterised in that the antechamber region (2) extends set back relative to the matrix entry (8).

13. Tool according to one of the claims 1 to 12, characterised in that the core (9) associated with the matrix (1) has a pressure surface (10) extending to protrude in accordance with the antechamber region (2).

14. Tool according to claim 13, characterised in that the pressure surface (10) is constructed to be movable into the antechamber region (2).

15. Tool according to claim 13 or 14, characterised in that a first squeezing edge (11) for fixing the deformable material (12) is producible between the beginning of the pressure surface (10) and the beginning of the antechamber region (2).

16. Tool according to claim 15, characterised in that a pressure-tight and/or vacuum-tight tool cavity is achievable due to the first squeezing edge (11).

17. Tool according to one of the claims 13 to 16, characterised in that a second squeezing edge (13) is producible at the end of the antechamber region (2) by the inward movement of the pressure surface (10).

18. Tool according to one of the claims 13 to 17, characterised in that exchangeable inserts for changing the size of the squeezing edges (11; 13) are arranged at the mutually facing sides of the matrix (1) and/or the core (9).

## Revendications

1. Outil servant à fabriquer des pièces mises en forme avec des contours, consistant en une matrice (1) et un noyau en faisant partie (9), qui sont disposés individuellement ou peuvent se déplacer ensemble l'un vers l'autre, entre lesquels on peut insérer un matériau déformable,
caractérisé en ce que
la matrice (1) présente une zone de préchambre (2) qui s'étend entre la zone d'entrée (8) de la matrice (1) et le contour (4) ou une contre-dépouille (3).

2. Outil selon la revendication 1,
caractérisé en ce que
la zone de préchambre (2) est limitée perpendiculairement, d'un côté, à la face frontale (5) de la matrice (1).

3. Outil selon la revendication 1 ou 2,
caractérisé en ce que
pour fixer de la matière de décoration (6), on dispose une fixation (7) dans la zone de la préchambre (2).

4. Outil selon la revendication 3,
caractérisé en ce que
la fixation (7) est formée par une ou plusieurs broches.

5. Outil selon la revendication 3 ou 4,
caractérisé en ce que
la fixation (7) est disposée sur la partie de la zone de préchambre (2) qui est tournée vers le côté frontal (5) de la matrice (1).

6. Outil selon l'une des revendications 1 à 5,
caractérisé en ce que
l'on fait passer la fixation (7) dans un guidage forcé.

7. Outil selon la revendication 6,
caractérisé en ce que
le guidage forcé s'étend sur toute la zone de la préchambre (2).

8. Outil selon la revendication 6 ou 7,
caractérisé en ce que
le guidage forcé est constitué par une rainure s'étendant en longueur.

9. Outil selon l'une des revendications 6 à 8,
caractérisé en ce que
la fixation (7) passe dans le guidage forcé par engagement à friction.

10. Outil selon l'une des revendications 6 à 9,
caractérisé en ce que
la force qui est nécessaire pour surmonter l'engagement à friction, est plus petite que la force qui est nécessaire pour déchirer la matière de décoration (6).

11. Outil selon l'une des revendications 8 à 10,
caractérisé en ce que
l'on dispose dans la rainure un ressort de compression.

12. Outil selon l'une des revendications 1 à 11,
caractérisé en ce que
la zone de préchambre (2) s'étend de façon reculée par rapport à l'entrée (8) de la matrice.

13. Outil selon l'une des revendications 1 à 12,
caractérisé en ce que
le noyau (9) associé à la matrice (1) présente une surface de pression (10) qui s'étend en avant d'une façon qui correspond à la zone de préchambre (2).

14. Outil selon la revendication 13,
caractérisé en ce que
la surface de pression (10) est constituée de façon à pouvoir entrer dans la zone de préchambre (2).

15. Outil selon l'une des revendications 13 ou 14,
caractérisé en ce que
l'on peut réaliser, entre le début de la surface de pression (10) et le début de la zone de préchambre (2), une première arête d'écrasement (11) servant à fixer la matière déformable (12).

16. Outil selon la revendication 15,
caractérisé en ce que
l'on peut obtenir, par la première arête d'écrasement (11), une cavité d'outil étanche à la pression et/ou au vide.

17. Outil selon l'une des revendications 13 à 16, caractérisé en ce qu'
à l'extrémité de la zone de préchambre (2) on peut réaliser, par l'arrivée de la surface de pression (10), une deuxième arête d'écrasement (13).

18. Outil selon l'une des revendications 13 à 17,
caractérisé en ce que
l'on dispose, pour faire varier la grandeur des arêtes d'écrasement (11; 13), des inserts que l'on peut changer sur les côtés de la matrice (1) et/ou du noyau (9), inserts qui sont tournés l'un vers l'autre.
